Europäisches Patentamt

European Patent Office

Office européen des brevets

(19)

(11) Veröffentlichungsnummer: **0 247 593 B1**

(12) **EUROPÄISCHE PATENTSCHRIFT**

(45) Veröffentlichungstag der Patentschrift: **18.12.91**

(51) Int. Cl.⁵: **C22B 9/02**

(21) Anmeldenummer: **87107721.0**

(22) Anmeldetag: **27.05.87**

(54) **Tragtrog für auswechselbare Hochtemperatur-Metallschmelzenfilter.**

(30) Priorität: **30.05.86 DE 3618284**

(43) Veröffentlichungstag der Anmeldung:
**02.12.87 Patentblatt 87/49**

(45) Bekanntmachung des Hinweises auf die
Patenterteilung:
**18.12.91 Patentblatt 91/51**

(84) Benannte Vertragsstaaten:
**AT BE CH DE ES FR GB GR IT LI NL SE**

(56) Entgegenhaltungen:
**EP-A- 0 060 460        EP-A- 0 178 926
DE-A- 2 932 614        DE-A- 3 151 434
DE-C- 719 181          DE-C- 2 613 023**

(73) Patentinhaber: **Steuler-Industriewerke GmbH
Postfach 1448 Georg-Steuler-Strasse 175
W-5410 Höhr-Grenzhausen(DE)**

(72) Erfinder: **Loehr Willy
Scheidstr. 1
W-5410 Hoehr-Grenzhausen(DE)**

(74) Vertreter: **Hemmerich, Friedrich Werner et al
Patentanwälte HEMMERICH-
MÜLLER-GROSSE-POLLMEIER-MEY Eduard-
Schloemann-Strasse 47
W-4000 Düsseldorf 1(DE)**

EP 0 247 593 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Tragtrog für auswechselbare Hochtemperatur-Metallschmelzenfilter, bestehend aus einem einstückigen Bodenstück mit einer Aufnahmepfanne, in die in der Pfannenöffnung, über dem Pfannenboden ein Halterahmen für das Filterstück eingesetzt ist, wobei die Pfannenöffnung über der oberen Begrenzungsebene des Filterstücks eine Einlaufausnehmung und unter dessen unterer Begrenzungsebene eine Auslauföffnung für die Schmelze aufweist, und aus auf den Rand der Pfannenöffnung aufsetzbaren, die Pfannenöffnung umgrenzenden, mit ihren Stoßkanten und der Begrenzungskante der Pfannenöffnung falzverbindbaren, nach oben ragenden Wandungsplatten und einem, Bodenstück und Wandungsplatten einfassenden kastenförmigen Metallgehäuse.

Tragtröge dieser Art dienen dazu, eine hochgradige Reinigung der cft stark verschmutzten Metallschmelze bei der Gewinnung von z.B. Edelmetallen zu erzielen. Die noch ungereinigte Metallschmelze wird dabei in die Einlaufausnehmung oberhalb der oberen Begrenzungsebene des Filters in den Tragtrog eingeleitet und steht innerhalb des von den Wandungsplatten gebildeten Beckens auf dem Filter auf, passiert dieses Filter und läuft gereinigt, auf dem Pfannenboden gesammelt, durch die Auslauföffnung aus dem Tragtrog ab.

Bei bekannten gattungsgemäßen Tragtrögen wurden gießbare oder plastisch verformbare feuerbeständige keramische Werkstoffe in den unteren Teil des kastenförmigen Metallgehäuses eingebracht und zu dem einstückigen Bodenstück mit der Aufnahmepfanne, der Einlaufausnehmung und der Auslauföffnung geformt und dabei ein Halterahmen aus hochfeuerfestem keramischem Werkstoff für das Filterstück in die Pfannenöffnung mit eingeformt. Auf die obere Begrenzungskante des Pfannenrandes wurden dann die mit ihren Stoßkanten untereinander falzverbindbaren Wandungsplatten aufgesetzt und mit dieser Begrenzungskante ebenfalls falzverbunden. In die Falzfugen wurden geeignete Bindezemente zu deren Abdichtung eingebracht.

Diese Ausbildungen bekannter gattungsgemäßer Tragtröge bringen beim Reinigungsbetrieb häufig den Nachteil mit sich, daß die aus dem Filter austretende, gereinigte Metallschmelze aus dem gegossenen oder plastisch verformten feuerfesten Werkstoff der Pfanne selbst erneut Verunreinigungen aufnimmt. Ferner kommt es häufig vor, daß das in den Halterahmen eingesetzte Filterstück sich infolge von Verkrustungen und von bei den hohen Temperaturen der Schmelzen auftretenden Schmelz-Schweißvorgängen im Bereich der Ränder der Sitzflächen von Filterstück und Halterahmen das Filterstück nicht mehr vom Halterahmen trennen läßt. In einem solchen Fall muß der Halterahmen aus der Werkstoffmasse des Bodenstücks, in die er eingeformt wurde, manuell herausgebrochen und ebenfalls manuell ein neuer Halterahmen eingeformt werden. Dieses Auswechseln erfordert nicht nur einen sehr großen Arbeitsaufwand, sondern führt auch zu einer weniger homogenen und festen Gefügestruktur des Bodenstücks im Bereich der Reparaturstelle.

Ähnliche Schwierigkeiten ergeben sich, wenn wegen der Notwendigkeit des Einsatzes einer anderen Größe des Filterstücks der vorhandene Halterahmen gegen einen solchen mit anderen Abmessungen ausgetauscht werden muß.

Der Erfindung liegt die Aufgabe zugrunde, die gattungsgemäßen Filtertröge so zu verbessern, daß erneute Verunreinigungen der Metallschmelze nach deren Durchtritt durch das Filterstück vermieden werden und die mit dem Auswechseln der Halterahmen für die Filterstücke verbundenen Nachteile beseitigt werden.

Diese Aufgabe wird dadurch gelöst, daß der Tragtrog und die Wandungsplatten aus einem gebrannten keramischen, temperaturwechselbeständigen Werkstoff mit sehr geringer Oberflächenporosität bestehen, wobei erfindungsgemäß das Bodenstück und die Wandungsplatten lösbar, einsetz- und heraushebbar mit dem Metallgehäuse verbunden sind, wobei erfindungsgemäß die Pfannenöffnung des Bodenstücks eine Einlegesitzfassung mit Winkelquerschnitt aufweist, in die und aus der der das Filterstück aufnehmende Halterahmen einsetz- und heraushebbar ist. Dabei wird zweckmäßig Cordierit x) als temperaturwechselfester Werkstoff verwendet. Zwischen die Stoßkanten der Wandungsplatten und zwischen diese und die Begrenzungskante der Pfannenöffnung werden erfindungsgemäß Dichtungsstreifen aus keramischen Fasern und bei Pfannenöffnungen mit rechteckigem Querschnitt bestehen die Ecken der die Pfannenöffnung umgrenzenden Wandungsplatten zweckmäßig aus Winkelplatten. Für den Einsatz unterschiedlich großer Filterstücke können einer Einlegesitzfassung in der Pfannenöffnung Halterahmen mit unterschiedlichen Sitzöffnungen für entsprechend unterschiedlich große Filterstücke zugeordnet werden.

Die Verwendung eines temperaturwechselfesten gebrannten keramischen Werkstoffs für insb. das Bodenstück bringt es mit sich, daß die durch das Filterstück hindurchgetretenen heißen Schmelzen während ihres Aufenthaltes in der Pfanne nicht in den Pfannenwerkstoff einzudringen vermögen, d.h. ihn nicht "nässen" und somit auch keine neuen Verunreinigungen aufzunehmen vermögen; weiterhin wird dadurch in Verbindung mit der erfindungsgemäßen Ausbildung der Einlegesitzfassung mit Winkelquerschnitt erreicht, daß bei einer, wie erläutert, betrieblich unvermeidlichen - Verkrustung und/oder Verschweißung x) synthetischer Werkstoff, enthaltend bspw. 2MgO,2Al$_2$O$_3$,5SiO$_2$des Filterstücks mit der Oberfläche des Halterahmens beide Teile aus der Einlegesitzfassung herausgenommen und durch einen neuen Halterahmen, in den das neue Filterstück eingesetzt werden kann, ersetzt werden können. Durch das Einlegen von Dichtungsstreifen aus keramischen Fasern zwischen die Stoßkanten der Wandungsplatten und die Begrenzungskante der Pfannenöffnung wird die Notwendigkeit des Einbringens von zementierenden Bindemitteln vermieden und so auch das Ausbauen und ggfs. Auswechseln der Wandungsplatten bei einem Ausbau des Bodenstücks aus dem kastenförmigen Metallgehäuse vermieden. Die Bildung der Ecken der die Pfannenöffnung umgrenzenden Wandungsplatten durch Winkelplatten erhöht die Standfestigkeit der Umgrenzung erheblich.

Die Erfindung wird anhand des in der Zeichnung dargestellten Ausführungsbeispiels näher erläutert. In der Zeichnung zeigen

Fig. 1     den Tragtrog in perspektivischer Darstellung und

Fig. 2     eine Einzelheit von Fig. 1 in Schnittdarstellung.

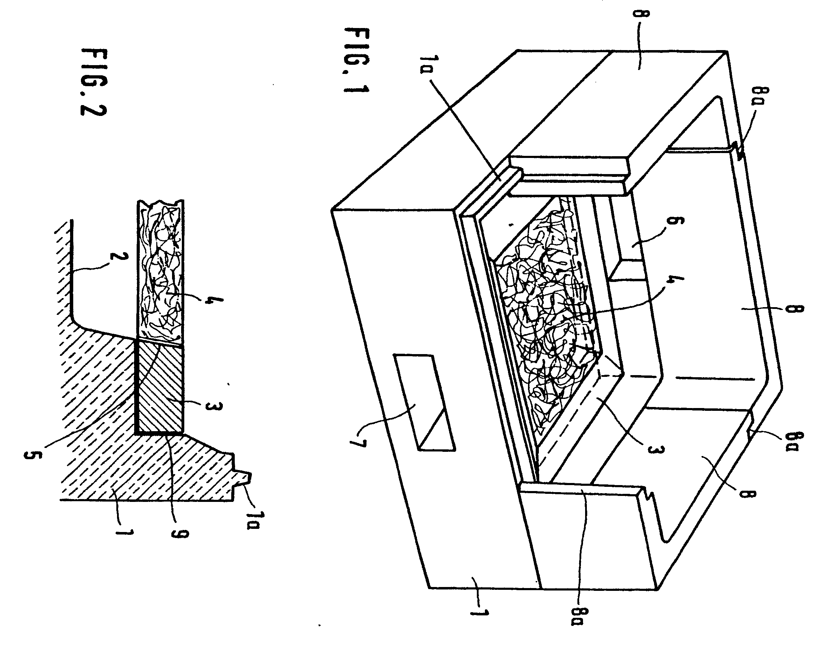

Wie aus Fig. 1 zu ersehen, besteht der Tragtrog aus dem quaderförmigen Bodenstück 1, das eine Aufnahmepfanne 2 bildet. In der Pfannenöffnung über dem Pfannenboden ist ein Halterahmen 3 für das teilweise dargestellte Filterstück 4 angeordnet. Das Filterstück 4 sitzt dabei in einer Aufnahme - Konus 5 des Halterahmens 3. Über der oberen Begrenzungsebene des Filterstücks 4 ist im Bodenstück 1 eine Einlaufausnehmung 6 und unterhalb der unteren Begrenzungsebene des Filterstücks 4 ist, ebenfalls im Bodenstück 1, eine Ablauföffnung 7 angeordnet. Auf die obere Begrenzungskante der Pfanne 2 des Bodenstücks 1 sind Wandungsplatten, hier in Form von Winkelplatten 8 aufgesetzt. Die Stoßkanten 8a dieser Winkelplatten 8 und die Begrenzungskanten 1a der Pfannenöffnung der Pfanne 2 des Bodenstücks 1 sind, wie ersichtlich, falzverbunden, und in die Stoßfugen sind nicht dargestellte Dichtstreifen aus keramischen Fasern eingelegt.

Wie aus Fig. 2 zu ersehen, ist in der Pfannenöffnung der Pfanne 2 eine Einlegesitzfassung 9 mit Winkelquerschnitt angeordnet, in die und aus der heraus der das Filterstück 4 aufnehmende Halterahmen 3 einsetz- und heraushebbar ist.

## Patentansprüche

1. Tragtrog für auswechselbare Hochtemperatur-Metallschmelzenfilter, bestehend aus einem einstückigen Bodenstück mit einer Aufnahmepfanne, in die in der Pfannenöffnung, über dem Pfannenboden ein Halterahmen für das Filterstück eingesetzt ist, wobei die Pfannenöffnung über der oberen Begrenzungsebene des Filterstücks eine Einlaufausnehmung und unter dessen unterer Begrenzungsebene eine Auslauföffnung für die Schmelze aufweist, und aus auf den Rand der Pfannenöffnung aufsetzbaren, die Pfannenöffnung umgrenzenden, mit ihren Stoßkanten und der Begrenzungskante der Pfannenöffnung falzverbindbaren, nach oben ragenden Wandungsplatten, **dadurch gekennzeichnet,** daß das Bodenstück (1) und die Wandungsplatten (8) aus einem gebrannten keramischen temperaturwechselfesten Werkstoff mit sehr geringer Oberflächenporosität bestehen.

2. Tragtrog nach Anspruch 1, **gekennzeichnet durch** Cordierit als temperaturwechselfester Werkstoff.

3. Tragtrog nach den Ansprüchen 1 und/oder 2, **dadurch gekennzeichnet,** daß die Pfannenöffnung des Bodenstücks (1) eine Einlegesitzfassung (9) mit Winkelquerschnitt aufweist, in die und aus der das Filterstück (4) aufnehmende Halterahmen (3) einsetz- und heraushebbar ist.

4. Tragtrog nach einem oder mehreren der Ansprüche 1 bis 3, **dadurch gekennzeichnet,** daß das Bodenstück (1) und die Wandungsplatten (8) lösbar einsetz- und heraushebbar mit dem Metallgehäuse verbunden sind.

5. Tragtrog nach einem oder mehreren der Ansprüche 1 bis 4, **gekennzeichnet durch** zwischen die Stoßkanten (8a) der Wandungsplatten (8) und zwischen diese und die Begrenzungskante (1a) der Pfannenöffnung der Pfanne (2) einlegbare Dichtstreifen aus keramischen Fasern.

6. Tragtrog nach einem oder mehreren der Ansprüche 1 bis 5, mit einer Pfannenöffnung mit rechteckigem Querschnitt, **dadurch gekennzeichnet,** daß die Ecken der die Pfannenöffnung umgrenzenden Wandungsplatten (8) aus Winkelplatten bestehen.

7. Tragtrog nach einem oder mehreren der Ansprüche 1 bis 6, **gekennzeichnet durch** einer Einlegesitzfassung (9) zugeordnete Halterahmen (3) für unterschiedlich große Filterstücke (4).

**Claims**

1. Housing for a reusable filter medium for molten metal of high temperature comprising a one piece bottom element forming a panlike opening, receiving a supporting-frame for the filter medium, said panlike opening provides an inlet port in the plane of the upper face and an outlet port in the plane of the lower face for the molten metal, said panlike opening surrounded by wall plates set up in upright position with their edges on the panlike opening border and connected to that border,
characterized in that
the bottom element (1) and the wall plates (8) consist of fired temperatur change resistant ceramic material with very small porosity.

2. Housing according to claim 1,
characterized in that
temperatur change resistant material is a Cordierit.

3. Housing according to claims 1 and/or 2,
that the panlike opening of bottom element (1) has the form of a rim (9) having an angular cross section into which said supporting frame (3) for the filter medium can be inserted and from which it can be removed.

4. Housing according to claims 1 - 3,
charcterized in that
the bottom element (1) and the wall plates (8) can be inserted into and removed from the housing.

5. Housing according to one ore more of claims 1 - 4,
characterized in that
sealing strips of ceramic fibre are insertable between the edges (8a) of the wall plates (8) and the border of the panlike opening.

6. Housing according to on more of claims 1 - 5,
panlike opening of which has a square cross section,
characterized in that
the corners of the wall plates (8) surrounding the panlike opening are formed by rectangular plates.

7. Housing according to one or more of claims 1 - 6,
characterized by
supporting frames (3) for filter mediums (4) of different seizes attached to one rim (9).

**Revendications**

1. Auge porteuse pour filtres des bains de fusion à haute température capables d'être échangés, ladite auge étant composée d'un élément de fond en forme de monobloc avec une poche réceptrice où on a inséré dans son ouverture de poche au-dessus du fond de la poche, un cadre de retenue destiné à l'élément filtrant à l'occasion de quoi l'ouverture de la poche comporte un évidement d'entrée sur le plan supérieur de limitation dudit élément filtrant, et une ouverture de sortie en-dessous de son plan limitatif inférieur pour la masse fondue, ladite auge se composant de surcroît de plaques de paroi saillant vers le haut pouvant être placées sur le bord de l'ouverture de poche et délimitant ladite ouverture, lesdites plaques de paroi étant aussi convenables à être assemblées par agrafage avec leurs rebords et le bord limitatif de ladite ouverture de poche
**caractérisée en ce que**
ledit élément de fond (1) et lesdites plaques de paroi (8) consistent en matière céramique cuite résistant aux variations de température et manifestant une porosité superficielle très réduite.

2. Auge porteuse selon la revendication 1
**caractérisée par**
Cordiérite comme matière résistant aux variations de température.

3. Auge porteuse selon les revendications 1 et/ou 2
**caractériée en ce que**
ladite ouverture de poche dudit élément de fond (1) possède une monture de siège d'insertion (9) á la section angulaire dans laquelle le cadre de retenue (3) recevant ledit élément filtrant (4) peut etre inséré respectivement enlevé de celle-ci.

4. Auge porteuse selon l'une quelconque des revendications 1 à 3
**caractérisée en ce que**
ledit élément de fond (1) et lesdites plaques de paroi (8) sont reliés au carter métallique de façon à être insérés et enlevés.

5. Auge porteuse selon l'une quelconque des revendications 1 à 4
**caractérisée par**
des bandes d'étanchéité en fibres céramiques pouvant être insérées entre les rebords (8a) des plaques de paroi (8) ainsi qu'entre celles-ci et le rebord limiteur (1a) de ladite ouverture de poche de la poche (2) proprement dite.

6. Autre porteuse selon l'une quelconque des revendications 1 à 5 avec une ouverture de poche à la section rectangulaire
**caractérisée en ce que**
les coins desdites plaques de paroi (8) délimitant l'ouverture de la poche consistent en plaques angulaires.

7. Auge porteuse selon l'une quelconque des revendications 1 à 6
**caractérisée par**
des cadres de retenue (3) affectés à une monture de siège d'insertion (9) relatifs audits éléments filtrants (4) à tailles différentes.

**FIG. 1**

**FIG. 2**